# EUROPEAN PATENT APPLICATION

(11) **EP 4 394 302 A1**
(43) Date of publication of application: **03.07.2024**
(21) Application number: 23000186.9
(22) Date of filing: 28.12.2023
(51) Int. Cl.: F28D 1/02, F24H 1/18, F24H 1/20, F28D 1/047, F28D 20/00, F24H 9/1809, F24D 17/00

(54) **THERMAL WATER STORAGE SYSTEM**

(30) Priority: 30.12.2022 IT 202200027405
(71) Applicant: EV Services S.r.l., 10138 Torino (TO) (IT)
(72) Inventor: Marinelli, Giuseppe, 10138 Torino (TO) (IT)
(74) Representative: Aprà, Mario

(57) **Abstract**

Thermal water storage system (10), characterised in that it comprises:
- a container (11) configured as a vertical tank, comprising:
- a curvilinear side wall (11.1), formed by means of curved sheet metal, and
- a flat panel (11.2), sealingly fixed along two opposite vertical edges of said curvilinear side wall (11.1) and having openings (11.3) for the insertion of heat exchangers;
- two opposite covers (13.1, 13.2), which sealingly close the top and bottom, respectively, of said tank (11);

- heat exchangers (12) arranged at least partly, by means of a respective coil heat exchange body (12.1), inside said tank (11), fixed, by means of respective end connections (12.2), with respect to said panel (11.2) at said openings (11.3), and provided for the circulation of a carrier fluid through the respective coil body (11.2);
and in that said openings (11.3) are configured as slots, having a larger dimension in the height direction of the tank (11), and said heat exchangers (12) comprise the respective flat body (12.1),
wherein the largest dimension in width of the flat body (12.1) of each of said exchangers (12) is smaller with respect to the largest dimension in height of the corresponding slot (11.3) and is less than the maximum width, according to a horizontal plane, of the interior of the tank (11) at the level of the corresponding slot opening (11.3).

According to the invention, said heat exchangers (12) are arranged in said tank (11) according to two different arrangements:
- a first introduction arrangement of the respective flat body (12.1) into the tank (11) through the corresponding slot (11.3), wherein the respective flat body (12.1) is arranged orthogonal with respect to a horizontal plane, and
- a second operating arrangement of the respective flat body (12.1) in the tank (11), wherein the respective flat body (12.1) is arranged inclined with respect to a horizontal plane according to an angle comprised between ± 90° and 0°.

## Description

The present invention relates to a thermal water storage system.

According to the known art, the puffer or thermal store is a tank designed both for the storage of water for heating circuits and, through the use of external exchangers (such as plate exchangers) or integrated internal exchangers (such as a domestic coil and tank in tank), for the storage of domestic hot water (hereinafter, briefly, 'DHW'). These stores improve the performance of the heating systems on the one hand and optimise the use of the energy sources to which they are connected on the other, which can be indifferently solar panels, gas boilers, biomass boilers and heating chimneys (pellets, wood, maize, etc.).

In particular, among others, what are called stratified storage tanks are known. These known tanks exploit the phenomenon of water stratification: in practice, hot water and cold water, having different temperatures, tend to behave as if they were two distinct liquids, remaining separated inside the same container, with hot water concentrated at the top of the tank and cold water at the bottom. If this phenomenon is favoured, very hot water can be withdrawn from start to finish, as if the tank contained only high temperature water, while in the absence of stratification, mixed and therefore lukewarm water would be withdrawn. Stratification in storage tanks also has another advantage: it allows the contributions of different heat sources to be stored in a single tank. For example, this is the case of a boiler connected to a gas boiler but, at the same time, also to a system of solar thermal panels, which produce hot water at a different temperature.

The loading is very fast: even after having withdrawn a large quantity of DHW, the DHW is available again in a short time, since the stratification process always starts in the upper section of the puffer, precisely where the DHW heat exchangers are located. Solar energy is best exploited through the natural circulation principle with the stratification of heat from top to bottom, so much so that excess energy can also be used for heating.

The costs for conventional stratification with plate exchanger, circulation pumps and control unit are forfeited.

The production of DHW by means of boilers is reduced to a minimum, as are the emissions from the burner, maximising the efficiency of the solar circuit in a simple and functional manner.

However, the known art of storage tanks leaves some serious problems unsolved.

### Presence of Legionella bacteria

Installations which produce nebulised water, such as air conditioning systems, hot water recirculation networks in plumbing systems, are favourable sites for the spread of the bacterium. Considering that the proliferation range of the bacterium goes from 15 °C to 50 °C (the bacterium exists up to 22 °C but is inactive), critical areas exist in plumbing systems: inside the pipes, especially if obsolete and with deposits therein, or even in closed sections, in storage tanks, boilers, shower heads and distribution terminals; emergency water systems, such as decontamination showers, eyewash stations and fire sprinkler systems can also be a site of proliferation.

The presence of stagnation and deposits within 'traditional' stores can create fertile ground for the multiplication of the bacterium.

The use of exchangers which can keep the heat carrier fluid and the mains water separate for the production of DHW avoids this danger.

### Scarce flexibility in exchanger management

The traditional systems are characterised by their lack of flexibility in exchanger management: in the case of a fixed coil, the exchanger cannot be replaced, so future improvements cannot be foreseen for the system in question. Furthermore, an insertion hole corresponds to each exchanger.

On the other hand, for reasons related to productivity standards, the stores are normally all made with a circular section. However, especially due to the necessary volumes, the circular shape does not allow the passage of the puffers through the openings of the technical rooms where they are installed.

### Turbulence/stratification

Stratification is a physical phenomenon which occurs in one way or another in every store; large volumes of water, especially for large stores, do not add efficiency to the solar circuit mainly due to the very long reaction times and the possible occurrence of dispersions.

In the event of stores with external stratification systems, the movement of the water masses does not occur for physical reasons inside the storage tank but is ensured by the presence of external pumps and valves. The external stratification is therefore linked to the use of control units / electronic control units which can wear out over time.

### Position of the couplings and connections, and not very functional connections

Generally, the position of the couplings and connections of the coils of the fixed exchangers is influenced by the geometry of the exchangers themselves, positioning themselves in a spread out and not very functional manner; the large distance between the couplings and connections determines the use of a considerable quantity of non-essential pipe which in turn generates dispersions and determines the non-optimal operation of the storage system.

EP 2 354 680 A1 discloses a thermal water storage system having the characteristics described in the pre-characterising part of claim 1.

Some objects of the invention are to provide a thermal water storage system which ensures greater hygiene, adaptability and modularity, Improved stratification and improvement in relation to heat losses.

### Advantages of the thermal water storage system according to the invention Improved hygiene

In the system according to the invention, thanks to the use of the exchangers, contact between the technical water and the water which will actually be produced for DHW is avoided. This thereby ensures avoiding contact with bacteria regardless of the presence of stagnation and sediment inside the stores.

### Adaptability and modularity

At the expense of their exchange surface, the exchangers often manage to come into contact with a limited volume of water inside the store. In the system according to the invention, the adequately shaped openings make it possible to insert a greater number of exchangers, so as to modulate the exchange surface with the real system needs. This modulation is simple both during the installation of the heating system and in subsequent upgrading interventions.

Thanks to more elastic exchange systems, the system according to the invention also provides the possibility of giving the stores a particular shape, making it possible to create elliptical tanks which, in the case of large puffers, are ideal from the point of view of arrangement and above all the insertion inside the technical rooms.

### Improved stratification systems

The particular shape of the stratified partition allows the stratification process to be optimised, reducing heat losses, maximising the yield of the solar thermal systems and reducing the production of DHW by means of the boiler and the consequent emissions from the burner.

### Optimisation of heat dispersions

Large heat losses occur at the flanges and the couplings and connections of the store; such dispersions in the system according to the invention are easily reduced by decreasing the number of flanges, couplings and connections and reducing the amount of pipe necessary for their connection to the served systems.

In view of the aforesaid objects, the present invention provides a thermal water storage system, the essential characteristics of which are the subject of claim 1.

Other advantageous characteristics of the present invention are described in the dependent claims.

Further characteristics and advantages of the invention result from the following detailed description of an embodiment, with reference to the drawing showing important details for the invention, as well as the claims. The characteristics illustrated herein do not necessarily have to be understood as to scale and are depicted so that the peculiarities according to the invention are clearly highlighted.

In the attached drawing:
- figures 1, 2 and 3 are front raised, side raised and horizontal section views, respectively, of the thermal water storage system according to an example embodiment of the invention, in a first version in which a front panel it is made of aluminium;
- figures 4, 5, 6 and 7 are front raised, side raised views, in vertical section of figure 4 and in vertical section of figure 5, respectively, of the thermal water storage system according to an example embodiment of the invention, in a second version in which a front panel is made of plastic material;
- figures 8, 9, 10 are vertical section, side raised and top plan views, respectively, of an internal partition for the stratification of thermal water in the storage system according to a first embodiment variant;
- figures 11 and 12 are plan views, from above and below respectively, of an internal partition for the stratification of thermal water in the storage system according to a second embodiment variant;
- figure 13 is a simplified horizontal section view of a circular section side wall tank of the system according to the invention with an exchanger having an essentially rectangular outline;
- figure 14 is a front raised view of the tank of figure 13 in which different arrangements of exchangers are shown at different levels and at respective insertion slots in the tank itself;
- figure 15 is a view of an exchanger of the storage system according to the invention having at least a partly curvilinear outline;
- figure 16 Illustrates a vertical and partial section of two covers of the storage system mechanically joined to the side wall of the tank by means of an arrangement of brackets and bolts;
- figure 17 is a schematic view, similar to that of figure 13, but on a different scale and showing the comparison between two different shapes of the side wall of a tank of the storage system according to the invention.

With reference to the drawing, 10 indicates the thermal water storage system according to the invention.

Said system 10 comprises:
- a container 11 configured as a vertical tank, having a height greater than the width and comprising a side wall 11.1, formed by means of a curved sheet metal, and a flat panel 11.2, sealingly fixed along two opposite vertical edges of said side wall 11.1 and having openings 11.3 for the insertion of heat exchangers,
- heat exchangers 12 arranged, by means of a heat exchange body 12.1, inside said tank 11 and fixed, by means of end connections 12.2, with respect to said panel 11.2 at said openings 11.3,
- two opposite covers 13.1, 13.2, i.e., an upper cover 13.1 and a lower cover 13.2, which sealingly close the top and bottom, respectively, of the tank 11.

In particular, said exchangers 12 comprise the respective coil-shaped heat exchange body 12.1 arranged inside said tank 11 and the sealed couplings 12.3, fixed with respect to said panel 11.2 and provided for the circulation of a carrier fluid through the corresponding coil body 11.2.

Advantageously, said panel 11.2 of the tank 11 is positioned so as to ensure maximum freedom of intervention by an operator.

In particular, said panel 11.2 of the side wall 11.1 of the tank 11 is a straight panel in plastic laminate, or, advantageously, it is a straight panel in aluminium.

The above-described shape of the tank 11 of the system 10 according to the invention allows the couplings 12.3 and the connections 12.2 of the exchangers 12 to be arranged at said panel 11.2 of the side wall 11.1 of the tank 11 in an aligned and concentrated manner.

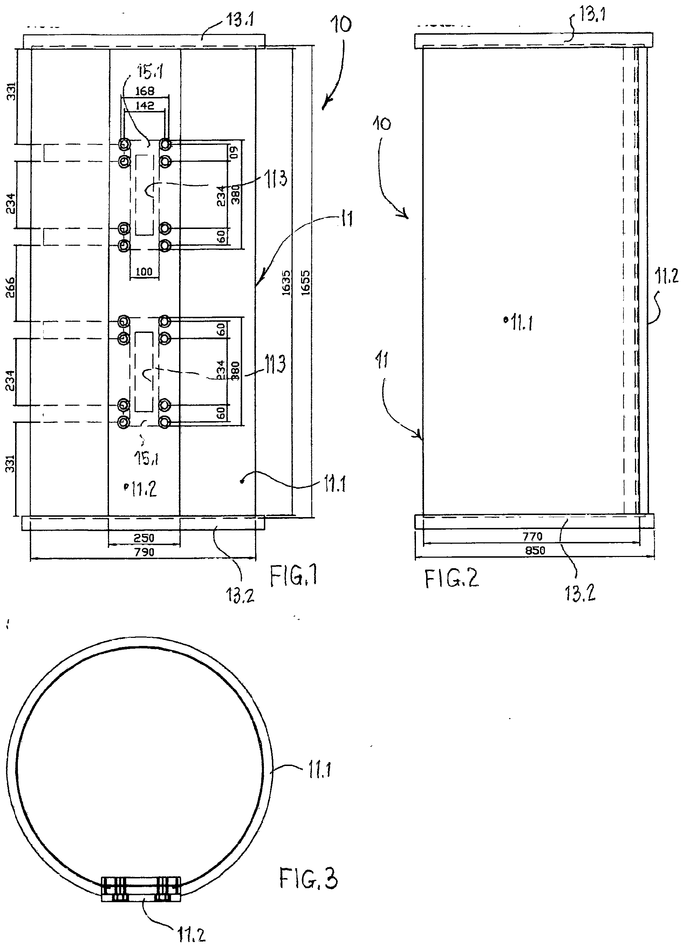

Figures 1 to 3 show the tank 11 of the system 10, in which said tank 11 comprises a straight panel 11.2 in aluminium.

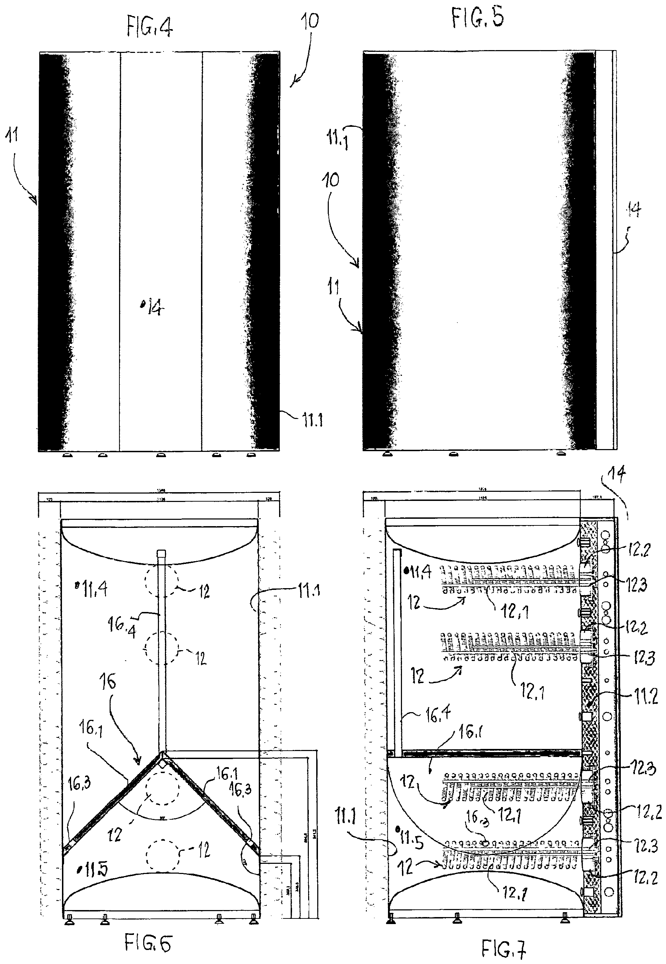

Figures 4 to 7 show the tank 11 of the system 10, in which said tank 11 comprises a rectilinear panel 11.2 in plastic laminate.

It should be noted that said openings 11.3 of the panel 11.2 for the insertion of the body 12.1 of the exchangers 12 in the tank 11 are configured as rectangular, or elliptical, slots having a larger dimension in the height direction of the tank 11 and through which the corresponding exchangers 12 are inserted, which comprise the respective flat body 12.1 (i.e., said body 12.1 has each turn of the coil having two opposite straight and close branches and two opposite end loops).

The largest dimension in width of the flat body 12.1 of said exchangers 12 is smaller with respect to the largest dimension of the corresponding slot 11.3 and less than the maximum width, according to a horizontal plane, of the inside of the tank 11 at the level of the corresponding slot 11.3.

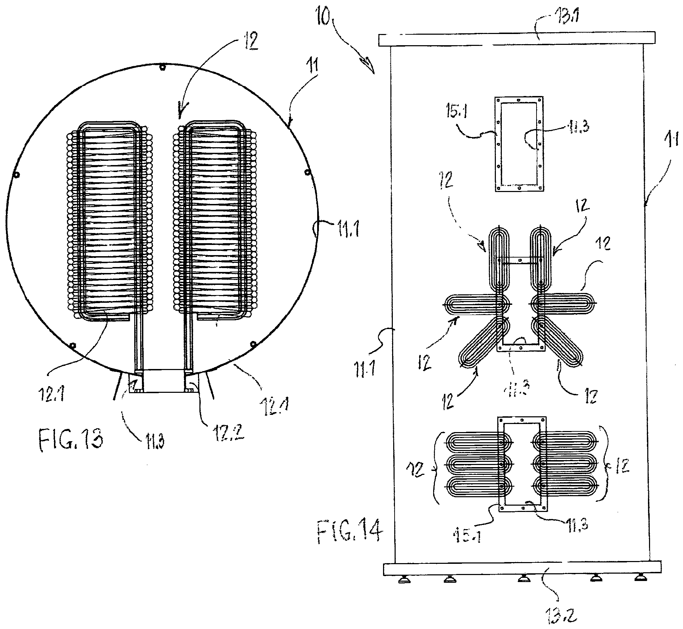

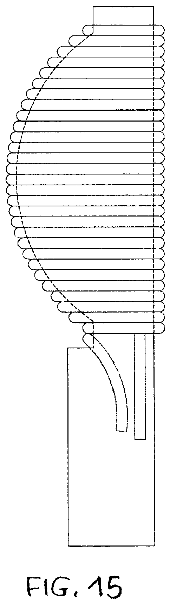

See figures 13, 14, 15 which illustrate the shape and operating arrangement of said exchangers 12, according to some embodiment examples.

Operationally, said exchangers 12, once the respective body 12.1 has been inserted into the tank 11 through the corresponding slot 11.3, are rotated around a horizontal axis (for example by 90° or less), arranging the respective flat body 12.1 in a parallel or inclined arrangement with respect to a horizontal plane.

Such an arrangement allows the exchangers 12 to be chosen so that they have, when installed, an exchange surface whose dimensions also almost correspond to those of the horizontal section of the interior of the tank 11.

By appropriately sizing said openings 11.3 it is possible to insert a consistent number of exchangers 12 in the tank 11 to modulate and increase the exchange surface in the best manner.

The structure of the exchangers 12 is made by means of a metal tubular folded into a coil with free ends of the two branches shaped so as to allow the locking of the exchanger 12, for example, on a horizontal plane perpendicular to the axis of the side wall 11.1 of the tank 11, or with pre-established inclinations with respect to said plane. In relation to the reduction of heat dispersions, the fact of concentrating the couplings 12.3 and the connections 12.2 of the exchangers 12 as much as possible allows the creation of a smaller number of openings 11.3 in the tank 11, since an opening is no longer necessary for each exchanger 12 , but several exchangers 12 can be inserted through the same opening 11.3 and fixed in installation with respect to the tank 11. Furthermore, to reduce dispersions, a removable front cover 14 is provided, superimposed on said panel 11.2 of the side wall 11.1 of the tank 11. Said front cover 14 is made of high-density plastic material resistant to high temperatures, like the upper 13.1 and lower 13.2 covers of the tank 11.

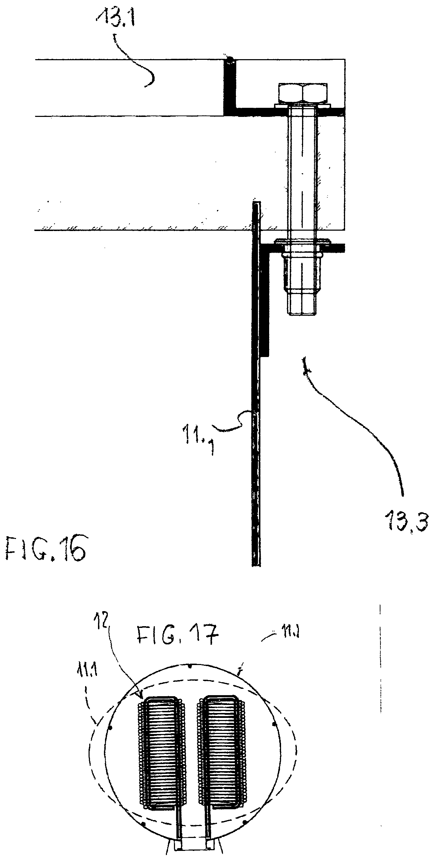

It should be noted that the system 10 comprises metal frames and/or plates 15.1 fixed at the openings 11.3, which are sealed. The connections 12.2 and the couplings 12.3 of various diameters for the inlet and outlet of the carrier fluid with respect to the exchangers 12 are fixed with respect to said sealed metal frames and/or plates 15.1, as well as the means for coupling the support structures of the exchangers themselves. Said two covers 13.1, 13.2 are mechanically joined to the side wall 11.1 of the tank 11 by means of a system of brackets and bolts 13.3. The bolts cooperate with particular square brackets fixed near the respective edge of the side wall 11.1 of the tank 11. A gasket between each bracket and respective bolt ensures, in addition to the closing tension of the bolts, also the watertightness (see figure 16).

It should be noted that each cover 13.1, 13.2 has a flat surface and allows multiple tanks 11 to be stacked.

With reference to the geometry of the heat exchangers 12 with flat body 12.1, it should be noted that the system 10 comprises not only rectangular flat-body exchangers 12 but also exchangers 12 with flat bodies 12.1 with a curvilinear outline. This particular design of the exchangers 12 allows the exchangers 12 to cover, in installation, almost all of the fluid present inside the tank 11 of the system 10.

Furthermore, the storage system 10 according to the invention, thanks to the particular geometry of the exchangers 12 and the slots 13 in the tank 11, allows the tank 11 to be configured, not only in a traditional form having a circular horizontal section, but also, for example, as a tank 11 having a side wall 11.1 which has a substantially elliptical horizontal section. Refer to figure 17. This arrangement allows, for example, to create and install a large capacity storage system 10 which, however, in the case of a tank with a circular horizontal section, could not be installed in a conventional room, due to Incompatibility with the openings in the walls and related fixtures. In other words, the capacity of the storage system 10 is not determined by the size of the door of the installation room: in fact, it is possible to create a storage system 10 of large volume even with at least one horizontal section dimension smaller than 80 cm, i.e., with dimensions which ensure passage through the traditional doors of the rooms intended for the installation of the system itself.

The system 10 according to the invention comprises, inside the tank 11, a stratifying partition 16 having two inclined flaps 16.1.

Said stratifying partition 16 is arranged at an intermediate height in the tank 11 and comprises a sheet metal plate configured as a roof 16.2 with two inclined flaps 16.1, whose periphery is sealingly arranged against the side wall 11.1, 11.2 of the tank 11 and, seen in plan, has a shape corresponding to the horizontal section of the internal face of the wall Itself. Said roof partition 16 has two through holes 16.3, respectively provided at a lower area of each flap 16.1, and supports a fixed vertical pipe 16.4, fixed with one end at the top of said roof partition 16 and with the other end near an upper area of the tank 11 of the system 10. Said stratifying partition 16 divides the tank 11 into two chambers, respectively an upper chamber 11.4 and a lower chamber 11.5. Said two holes 16.3 of the flaps 16.1 of the roof partition 16 and said vertical pipe 16.4 put said two chambers 11.4, 11.5 of the tank 11 in fluid communication. The function of said stratifying partition 16 is to make the cold water flow downwards into the lower part 11.5 of the tank 11 through the holes 16.3 of the partition itself, without the need for a connection pipe. In the tank 11, the heated water instead collects near the top of the roof partition 16 and rises to the upper part 11.4 of the tank 11 through said pipe 16.4, similarly to what occurs in a traditional stratified store. In particular, said vertical pipe 16.4 allows the passage of the hottest fluid to the upper part 11.4 of the tank 11.

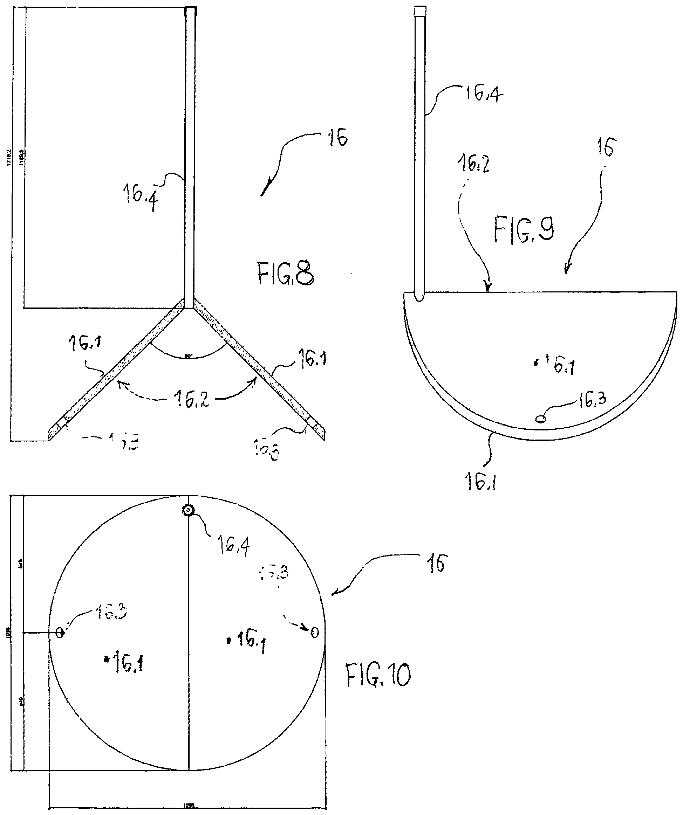

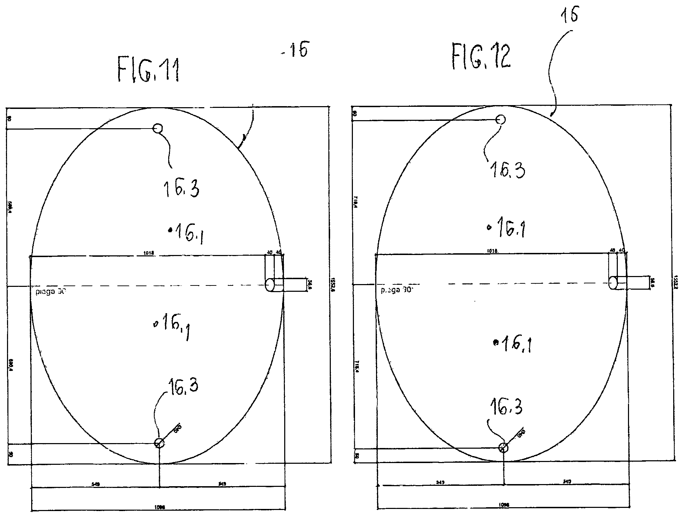

It should be noted that said stratifying partition 16 has, seen in plan view, a peripheral outline corresponding to the horizontal section of the internal wall 11.1, 11.2 of the tank 11: Such a peripheral contour can be circular or elliptical or of another appropriate geometric shape. Refer to figure 10, in which said stratifying partition has a circular peripheral outline, and to figures 11, 12, in which said stratifying partition has an elliptical peripheral outline.

As can be seen from the foregoing, the present invention allows the objects set out to be achieved in a simple and effective manner.

## Claims

1. Thermal water storage system (10), comprising:
- a container (11) configured as a vertical tank, comprising:
- a curvilinear side wall (11.1), formed by means of curved sheet metal, and
- a flat panel (11.2), sealingly fixed along two opposite vertical edges of said curvilinear side wall (11.1) and having openings (11.3) for the insertion of heat exchangers;
- two opposite covers (13.1, 13.2), which sealingly close the top and bottom, respectively, of said tank (11);
- heat exchangers (12) arranged at least partly, by means of a respective coil heat exchange body (12.1), inside said tank (11), fixed, by means of respective end connections (12.2), with respect to said panel (11.2) at said openings (11.3), and provided for the circulation of a carrier fluid through the respective coil body (11.2);
wherein said openings (11.3) are configured as slots, having a larger dimension in the height direction of the tank (11), and said heat exchangers (12) comprise the respective flat body (12.1),
wherein the largest dimension in width of the flat body (12.1) of each of said exchangers (12) is smaller with respect to the largest dimension in height of the corresponding slot (11.3) and is less than the maximum width, according to a horizontal plane, of the interior of the tank (11) at the level of the corresponding slot opening (11.3),
**characterised in that** said heat exchangers (12) are arranged in said tank (11) according to two different arrangements:
- a first introduction arrangement of the respective flat body (12.1) into the tank (11) through the corresponding slot (11.3), wherein the respective flat body (12.1) is arranged orthogonal with respect to a horizontal plane. and
- a second operating arrangement of the respective flat body (12.1) in the tank (11), wherein the respective flat body (12.1) is arranged inclined with respect to a horizontal plane according to an angle comprised between ± 90° and 0°.

2. System (10) according to claim 1, **characterised in that** said tank (11) comprises a removable front cover (14), superimposed on said panel (11.2).

3. System (10) according to claim 1, **characterised in that** it comprises metal frames and/or plates (15.1) fixed at said openings (11.3), wherein said metal frames and/or plates (15.1) are sealingly sealed and support fixed connections (12.2) and/or couplings (12.3), provided for the inlet and outlet of carrier fluid with respect to said heat exchangers (12), and means for supporting said heat exchangers ( 12).

4. System (10) according to any one of the preceding claims, **characterised in that** said heat exchangers (12) with flat body (12.1) have a curvilinear outline.

5. System (10) according to any one of the preceding claims, **characterised in that** said tank (11) has a circular or respectively elliptical section along a horizontal plane.

6. System (10) according to any one of the preceding claims, **characterised in that** it comprises a stratifying partition (16) arranged inside said tank (11) and having two inclined flaps (16.1).

7. System (10) according to claim 6, **characterised in that** said stratifying partition (16) is arranged at an intermediate height in the tank (11) and comprises a plate configured as a roof (16.2) with two inclined flaps (16.1), whose periphery is sealingly arranged against the side wall (11.1, 11.2) of said tank (11) and, seen in plan view, has a peripheral outline corresponding to the horizontal section of the internal face of said side wall (11.1, 11.2).

8. System (10) according to claim 6 and/or 7, **characterised in that** said partition (16) has two through holes (16.3), respectively provided at a lower area of each flap (16.1), and supports a fixed vertical pipe (16.4), fixed with one end at the top of said partition (16) and with the other end near an upper area of said tank (11), and **in that** said stratifying partition (16) divides said tank (11) into two chambers, respectively an upper chamber (11.4) and a lower chamber (11.5), wherein said two holes (16.3) of the flaps (16.1) of the partition (16) and said vertical pipe (16.4) put said two chambers (11.4, 11.5) of said tank (11) in fluid communication.

9. System (10) according to claim 8, **characterised in that** said partition (16), said two through holes (16.3) and said vertical pipe (16.4) are configured so as to make cold water flow downwards into the lower chamber (11.5) of said tank (11) through said holes (16.3), while heated water collects near the top of said partition (16) and rises into the upper chamber (11.4) of said tank (11) through said vertical pipe (16.4), wherein said vertical pipe (16.4) allows the passage of the hottest fluid to the upper chamber (11.4) of said tank (11).
